# EUROPÄISCHE PATENTSCHRIFT

(11) **EP 3 504 471 B1**
(45) Veröffentlichungstag und Bekanntmachung des Hinweises auf die Patenterteilung: **27.12.2023**
(21) Anmeldenummer: 17757487.8
(22) Anmeldetag: 10.08.2017
(51) Int. Cl.: F16L 55/16, B63B 17/00, F16L 55/134

(54) **LECKAGE-ABDICHTVORRICHTUNG, DEREN VERWENDUNG UND SYSTEM ZUM ABDICHTEN EINER LECKAGE**
LEAK-SEALING DEVICE, ITS USE AND SYSTEM FOR SEALING A LEAK
DISPOSITIF D'ÉTANCHÉIFICATION DES FUITES, SON UTILISATION ET SYSTÈME PERMETTANT D'ÉTANCHÉIFIER UNE FUITE

(30) Priorität: 23.08.2016 DE 102016010237
(43) Veröffentlichungstag der Anmeldung: 03.07.2019
(73) Patentinhaber: Wenning, Bernd-Josef, 46414 Rhede (DE); Lötters, Rene, 46414 Rhede (DE)
(72) Erfinder: Wenning, Bernd-Josef, 46414 Rhede (DE); Lötters, Rene, 46414 Rhede (DE)
(74) Vertreter: Samson & Partner Patentanwälte mbB
(86) Internationale Anmeldenummer: PCT/EP2017/070362
(87) Internationale Veröffentlichungsnummer: WO 2018/036838

(56) Entgegenhaltungen:
- WO-A1-2009/123383
- GB-A- 2 217 591
- GB-A- 189 600 320
- US-A- 4 390 333
- US-A1- 2011 308 656

## Beschreibung

Die Erfindung betrifft eine Leckage-Abdichtvorrichtung und deren Verwendung sowie ein Verfahren und System zum Abdichten einer Leckage in einem Behälter, Tank und/oder Rohr.

Bei dem Behälter kann es sich beispielsweise um einen Silo, einen Gasspeicher beziehungsweise Gasbehälter einer Biogasanlage, einen Fermenter oder Rohr oder ähnliches handeln, die in ihrem Inneren ein flüssiges und/oder gasförmiges Medium beinhalten.

In diesen Unterlagen beziehen sich Lagebezeichnungen, wie "oben", "unten", "unten vorne", "unten hinten", etc. stets aus der Sicht eines Nutzers beziehungsweise Bedieners der Leckage-Abdichtvorrichtung, mit Blick auf eine quer vor ihm angeordnete Leckage-Abdichtvorrichtung.

### Stand der Technik

Vorrichtungen zum Abdichten von Leckagen sind in unterschiedlichen Ausführungen bekannt. Beispielsweise offenbaren die DD 240 769 A1 und DD 232 461 A1 jeweils ein Verfahren zur Leckabdichtung an Hohlkörpern. Dabei wird auf Rohrleitungen mit einer Leckage beispielsweise in Form eines Risses oder einer Aufwölbung das Leck von außen durch Aufkleben von Substratmaterial abgedichtet. Da die durch eine Leckage austretenden Medien in der Regel unter Druck stehen, sind diese Abdichtverfahren zeitaufwändig und arbeitsintensiv.

Die DE 103 31 378 A1 offenbart eine pneumatische Leckabdichtung durch Druckumkehr an geschlossenen Behältern und Rohrsystemen. Diese Leckabdichtung gestaltet sich in der Praxis aufwändig.

Die DE 38 44 485 C2 offenbart ein Verfahren zur Leckabdichtung in Rohrleitungen, insbesondere Trinkwasserleitungen. Dabei wird zur Leckage-Reparatur eine Trinkwasserzufuhr zunächst außer Betrieb genommen und die Rohrleitung mit Druckluft entleert.

Ein solches Verfahren ist nicht praktikabel für die Abdichtung eines großen Gas- und/oder Fluidbehälters beispielsweise einer Biogasanlage, da eine vollständige Entleerung beziehungsweise ein Austritt des Fluids oder Gases in die Umwelt, vermieden werden soll.

Schließlich offenbart die AU 2008 243 596 A2 ein Verfahren zum Abdichten einer Leckage in einer Pipeline oder einem Bohrloch. Die Abdichtung im Rohr erfolgt über einen innerhalb des Rohrs einsetzbaren rohrförmigen Körper, der über einen Dorn oder Mandrel mechanisch aufgeweitet wird.

Dieses Verfahren ist nur zur Verwendung bei Rohrleitungen und/oder Pipelines vorgesehen und der Körper lässt sich eher bei Außerbetriebnahme der Pipeline beziehungsweise Rohrleitung einsetzen.

Insgesamt sind bekannte Leckage-Abdichtvorrichtungen und Verfahren oftmals unflexibel in der Handhabung und aufwändig im Aufbau. Eine Abdichtung einer Leckage von außen ist problematisch hinsichtlich einer sicheren Abdichtung, da das ausströmende Medium die Abdichtung verhindert oder erschwert.

US 4,329,132 A offenbart eine Leckage-Abdichtvorrichtung, bei der ein Beutel mit einem aushärtbaren Schaummaterial befüllbar ist, der außerhalb einer Zuführvorrichtung angeordnet ist. Der Beutel wird über ein Gummi oder Seil im nicht abdichtenden Zustand zusammengehalten.

US 6,543,486 B1 offenbart eine Leckage-Abdichtvorrichtung zur Abdichtung von Leckagen beispielsweise in einem Boot. Innerhalb einer lanzenartigen Struktur ist ein Rohr vorgesehen, an dessen vorderem Ende eine aufblasbare Abdicht-Vorrichtung bzw. ein Beutel vorgesehen ist, der wiederum an seinem vorderen Ende von einer zerbrechlichen Abdeckung umgeben ist.

US 3,841,256 A offenbart eine Vorrichtung zum Abdichten eines Lecks in einer Bootswand, bei der zum Abdichten ein Gehäuseteil manuell verschiebbar vorgesehen ist.

GB189600320 offenbart einen Stopfen zum Verschließen von Schusslöchern oder Rissen in Schiffen.

US2011308656 A1 offenbart eine Vorrichtung und Methode zum Verschließen einer Hochdruckleitung. Die Vorrichtung umfasst eine Führungsleitung mit einer Pumpe an einem Ende und einem ausdehnbaren Verschluss am anderen Ende. Die Führungsleitung dient dazu, ein Material zuzuführen, das an einem Ende des beschädigten Rohres einen Verschluss erzeugen kann, wodurch verhindert werden soll, dass Öl oder andere Leitungsinhalte an der Quelle in das Rohr gelangen.

### Aufgabe und Lösung der vorliegenden Erfindung

Aufgabe der vorliegenden Erfindung ist es, eine andere Leckage-Abdichtvorrichtung und ein System und Verfahren zur Abdichtung einer Leckage bereitzustellen, die obige Nachteile wenigstens teilweise überwinden, mindestens aber reduzieren.

Diese Aufgabe wird durch die Gegenstände der unabhängigen Ansprüche 1 und 13 bis 15 gelöst.

Die gattungsbildende Leckage-Abdichtvorrichtung weist gemäß Anspruch 1 somit zusätzlich folgende Merkmale auf: sie umfasst eine gehäuseartige Trägereinheit, wenigstens ein an einem Endbereich der Trägereinheit vorgesehenes, expandierbares Leckage-Abdichtmittel, das in seiner Lagerposition nicht oder nur geringfügig expandiert ist, und wenigstens einen Fluidanschluss und/oder wenigstens eine Fluidabgabeeinheit, der/die mit der Trägereinheit derart gekoppelt ist, dass bei Fluidzufuhr Fluid das Leckage-Abdichtmittel in dessen Abdichtposition über eine Fluidzuleitung wenigstens teilweise mit dem Fluid befüllt und expandiert, wobei in der Trägereinheit eine längsbeweglich gelagerte Kolbeneinheit vorgesehen ist, und das Leckage-Abdichtmittel mit der Kolbeneinheit und/oder der Trägereinheit und dem wenigstens einen Fluidanschluss und/oder der wenigstens einen Fluidabgabeeinheit derart gekoppelt ist, dass bei Fluidzufuhr das Fluid die Kolbeneinheit in die Abdichtposition vortreibt und das Leckage-Abdichtmittel über eine Fluidzuleitung wenigstens teilweise befüllt.

Das erfindungsgemäße Verfahren zum Abdichten einer Leckage in einem Behälter, Tank und/oder Rohr umfasst die Schritte: Einführen einer erfindungsgemäßen Leckage-Abdichtvorrichtung wenigstens teilweise in eine Leckage in dem Behälter, Tank und/oder Rohr, und wenigstens teilweise Befüllen und Expandieren des Leckage-Abdichtmittels mit Fluid derart, dass das Leckage-Abdichtmittel aus dem Inneren des Behälters, Tanks und/oder Rohrs durch das dort ausströmende Medium gegen eine Innenwand des Behälters, Tanks und/oder Rohrs beaufschlagt wird und die Leckage abdichtet.

Die Erfindung umfasst ebenso ein System zum Abdichten einer Leckage in einem Behälter, Tank und/oder Rohr umfassend eine erfindungsgemäße Leckage-Abdichtvorrichtung und eine mit einer Freigabeeinheit zur Fluidabgabe versehene Fluidzufuhrvorrichtung.

Die Erfindung sieht auch eine Verwendung der erfindungsgemäßen Leckage-Abdichtvorrichtung zum Abdichten einer Leckage in einem Behälter, Tank und/oder Rohr vor.

Vorteilhaft stellt die Erfindung eine einfache Ausgestaltung einer Leckage-Abdichtvorrichtung, eines Verfahrens und eines Systems bereit, die bzw. das insbesondere zur Vermeidung von Umweltkatastrophen und Umweltschäden vorgesehen ist. Die Leckage-Abdichtvorrichtung wird auch als Leck-Stopp-Pistole bezeichnet.

Fluid im Sinne der Erfindung umfasst gasförmige und/oder flüssige Medien jeglicher Art und/oder Pulver/Granulat/Sand jeglicher Art sowie deren Mischungen.

Die Leckagen können aufgrund unterschiedlichster Umstände in Behältern, Rohren etc. entstehen, beispielsweise durch einen umgestürzten Baum, einen herabfallenden Ast, herabfallende Ziegel, Materialermüdung, Anfahrschäden oder sonstige Ursachen. So können etwa Fremdkörper, wie beispielsweise Steine oder ähnliches, die z.B. im Rahmen der Biogasgewinnung mit den zu verarbeitenden beziehungsweise umzuwandelnden Stoffen in die jeweiligen Behälter eingebracht werden, einen Behälter von innen beschädigen.

Die Vorrichtung, das Verfahren und das System sind vorteilhaft dazu ausgelegt, Leckagen jeglicher Art abzudichten und damit flexibel einsetzbar. Insbesondere ist deren Anwendung nicht auf Rohrleitungen oder rohrartig ausgestaltete Leitungen, die unter Druck stehendes Gas und/oder Fluid führen, vorgesehen. Ebenso kann in Abhängigkeit der Dimensionierung der jeweiligen Leckage-Abdichtvorrichtung diese auch zur Abdichtung von Leckagen in Gasbehältern oder Tanks, beispielsweise einer Biogasanlage, oder Fluidbehältern in beliebigen Abmessungen flexibel eingesetzt werden. Ein Einsatz ist beispielsweise an LKW's als Tankzug, an Behältern und Tanks unterschiedlicher Größen, an Booten und Schiffen, im Bereich der Flüssigmetall Verarbeitung mit sehr hohen Temperaturen, an allen Arten von Rohren wie etwa Abwasser, Gas, CO2, Stickstoff, Öl, Sole, Gülle oder an Lebensmittelleitungen wie Trinkwasser, Milch, Bier, Wein, Säfte, Cola, Fanta und sonstigen Getränkeleitungen, die alle unter anstehendem Druck geschlossen werden können, verwendbar.

Insgesamt lässt sich die Leckage-Abdichtvorrichtung in beliebig geeigneten Dimensionen und Längen der Trägereinheit auch Richtlanze genannt, mit unterschiedlichen Dimensionen und Abmessungen des wenigstens einen Abdichtmittels bereitstellen.

Auch sind die erfindungsgemäße Vorrichtung sowie das erfindungsgemäße Verfahren und System für verschiedenste Anwendungszwecke geeignet. Sie können beispielsweise in Abhängigkeit von der Dimensionierung bei Fahrzeugen, Tanklastzügen, der Feuerwehr bei Biogasanlagenbetreibern vorgehalten werden, um im jeweiligen Einsatzfall zur Anwendung zu kommen.

Das der Erfindung zugrundeliegende Prinzip liegt darin, dass die Leckage-Abdichtvorrichtung von außen in ein Leck eines Behälters, Tanks, etc. pistolenartig eingeführt wird, dann das Leckage-Abdichtmittel mit einem geeigneten gasförmigen und/oder flüssigen Fluid, beispielsweise Druckluft oder Kohlensäure, und/oder Pulver/Granulat und deren Mischungen befüllt wird, und dann das Leck von innen abgedichtet wird. Das Abdichtmittel wird also mittels des einfließenden Fluids oder Druckluft oder Kohlensäure in das ausströmende Medium "hineingeschossen". Dabei beaufschlagt das ausströmende Medium das expandierte Abdichtmittel aus dem Behälterinneren also von innen gegen die Behälterinnenwand.

Vorteilhaft lässt sich mit der erfindungsgemäßen Vorrichtung, dem Verfahren sowie dem System eine Leckage auch bei einem Ausströmen des Mediums fast und/oder vollständig schließen und abdichten. Die erfindungsgemäße Vorrichtung, das Verfahren sowie das System stellen somit eine Art "Erste Hilfe Maßnahme" dar für den schnellen und flexiblen Einsatz bei auftretenden Leckagen, so dass sich größere Umweltschäden verhindern lassen. Nach Einsatz der erfindungsgemäßen Vorrichtung, lässt sich dann die jeweilige Leckage entsprechend reparieren.

Der Druck zum Befüllen des Abdichtmittels muss dabei nur so hoch sein, dass er das ausströmende Medium aus dem Behälter, dem Rohr, dem Tank oder Speicher einen höheren Druck entgegensetzt. Beispielsweise kann der Druck eines ausströmenden Fluids, bspw. aus einem Behälter einer Biogasanlage, etwa 1,5 bar betragen. Wenn das der Leckage-Abdichtvorrichtung zugeführte Fluid, bspw. Druckluft oder Kohlensäure, einen höheren Druck aufweist, lässt sich das Abdichtmittel im ausströmenden Medium befüllen. Insgesamt lassen sich vorteilhaft die erforderlichen Drücke der Fluidzufuhr beziehungsweise des ganz oder teilweise expandierten beziehungsweise befüllten Leckage-Abdichtmittels der jeweiligen Leckage-Situation anpassen. Die Leckage-Abdichtvorrichtung ist also grundsätzlich bei sämtlichen Drücken des ausströmenden Mediums einsetzbar. Bei hohen Drücken kommen dann entsprechende Spezial-Kompressoren zum Befüllen des Abdichtmittels zum Einsatz.

Ebenso lassen sich unterschiedliche Fluide sei es gasförmig oder flüssig bereitstellen, mit denen das Abdichtmittel befüllt wird. Damit wird beim Abdichten beispielsweise einer Gasleitung das Abdichtmittel nicht mit Luft befüllt, um eine etwaige Explosionsgrenze nicht unnötig zu erhöhen und eine Gefährdung für den Nutzer bereitzustellen.

Da jede Leckage ein anderes Fluid zum Befüllen des Abdichtmittels erfordert, lassen sich jeweils entsprechend geeignete Fluide flexibel einsetzen, bspw. Kohlensäuregas, Druckluft, Sauerstoff oder sonstige Gase. Ebenso sind geeignete Flüssigkeiten, beispielsweise Öle und/oder Pulver/Granulate und deren Mischungen oder ähnliches einsetzbar. Dabei ist nur darauf zu achten, dass das zugeleitete Fluid mit dem ausströmenden Medium harmoniert, d.h. eine gefährliche Mischung, die etwa eine Explosionsgefahr hervorruft, wie etwa eine Kombination aus Sauerstoff und Methan und/oder anderen Stoffen verhindert wird.

Das Leckage-Abdichtmittel kann bspw. ballonartig vorgesehen sein, so dass es sich nach einem Austreiben aus der Vorrichtung innerhalb des Behälters auffüllt und dann durch den Druck des ausströmenden Mediums von innen gegen die Leckage gedrückt wird, derart, dass diese abgedichtet wird. Durch Anwenden einer Zugkraft auf die Leckage-Abdichtvorrichtung vom Behälter weg, lässt sich die Abdichtung der Leckage verbessern und insbesondere der Sitz des Abdichtmittels gegenüber dem Behälter anpassen.

Die Trägereinheit kann beliebig geeignete geometrische Ausgestaltungen, beispielsweise eckig, rund, rechteckig oder anders aufweisen. In der Praxis hat sich eine rohrartige Ausgestaltung als flexibel erwiesen. Eine rohrartige Ausgestaltung der Trägereinrichtung ermöglicht eine einfache Einführung in eine Leckage.

Die Trägereinheit ist vorteilhaft aus einem stabilen, aber leichten Material vorgesehen, um eine einfache Handhabung und schnellen Einsatz zum Einsatzort zu gewährleisten. Bei dem Material kann es sich beispielsweise um einen stoßfesten Kunststoff, ein Metall etwa Aluminium oder eine Metalllegierung oder auch um einen Verbundwerkstoff handeln. Das Abdichtmittel ist aus einem flexiblen und expandierbaren Material beispielsweise Kunststoff oder Kunststoffverbundstoffen vorgesehen. Ebenso können Kohlenstoffe bzw. Kohlenstoffgewebe (für extrem heiße Materialien) und Glasfaser verwendet werden. Die Materialwahl ist derart, dass das Abdichtmittel ballonartig auffüllbar und insbesondere dehnbar vorgesehen ist, um beispielsweise auf herausgebrochene Kanten der Leckage besser aufsitzen zu können. Das Material ist vom jeweils vorgesehenen Einsatzzweck abhängig und bringt - sofern erforderlich - eine gewisse Schnittfestigkeit mit.

Die wenigstens eine Fluidabgabeeinheit kann beispielsweise als eine Kohlensäurepatrone oder Druckluftpatrone vorgesehen sein, so dass die Leckage-Abdichtvorrichtung autark verwendet werden kann und keine externe Fluidquelle benötigt.

Alternativ oder zusätzlich kann ein Fluidanschluss vorgesehen sein, der beispielsweise mit einer externen Druckluftanlage, einem Kompressor, einer Gasflasche, einem Flüssigkeitsbehälter oder ähnlich geeigneten Mitteln koppelbar ist, um das jeweilige Abdichtmittel zu befüllen. Beim erfindungsgemäßen System kann eine an der Druckluftanlage, dem Kompressor, der Gasflasche etc. vorgesehene Freigabeeinheit zur Fluidabgabe betätigt werden, so dass eine Freigabeeinheit an der Leckage-Abdichtvorrichtung nicht erforderlich ist. Auch können bedarfsabhängig ein oder mehrere Fluidanschluss/-anschlüsse und eine oder mehrere Fluid-Abgabeeinheit(en) nebeneinander vorgesehen sein

Insgesamt stellen die erfindungsgemäße Leckage-Abdichtvorrichtung, das System und Verfahren eine flexible Vorrichtung und Verfahren bereit, um sowohl leckgeschlagene Behälter und Tanks als auch leckgeschlagene Rohre abzudichten. Damit verhindern sie, dass leckgeschlagene Behälter oder Speicher vollständig auslaufen und somit Umweltkatastrophen bewirken. Insbesondere, sind die Leckage-Abdichtvorrichtung, das System und Verfahren geeignet, sowohl dem unter Druck ausströmenden Medium zu begegnen und dessen Auslaufen zu stoppen als auch zu den meist unregelmäßig gezeichneten oder gebildeten Leckage-Austrittsöffnungen, durch die das Medium entweicht, zu begegnen und sich daran anzupassen.

Bevorzugt umfasst die Leckage-Abdichtvorrichtung weiter eine in der Trägereinheit längsbeweglich gelagerte Kolbeneinheit, wobei das Leckage-Abdichtmittel mit der Kolbeneinheit und/oder der Trägereinheit und dem wenigstens einen Fluidanschluss und/oder der wenigstens einen Fluidabgabeeinheit gekoppelt ist, derart, dass bei Fluidzufuhr das Fluid die Kolbeneinheit in die Abdichtposition vortreibt und das Leckage-Abdichtmittel über eine Fluidzuleitung wenigstens teilweise befüllt.

Dabei ist das Leckage-Abdichtmittel zwischen einer Lagerposition, in der sich das Leckage-Abdichtmittel wenigstens teilweise innerhalb oder außerhalb der Trägereinheit befindet, und einer Abdichtposition, in der sich das Leckage-Abdichtmittel zum Abdichten der Leckage wenigstens teilweise außerhalb der Trägereinheit befindet, beweglich gelagert.

Eine Lagerung des Leckage-Abdichtmittels wenigstens teilweise innerhalb der Trägereinheit schützt das Leckage-Abdichtmittel vor Beschädigungen. Die Kolbeneinheit stellt ein Austreiben in die Abdichtposition sicher.

Die Kolbeneinheit und das Leckage-Abdichtmittel können zeitgleich ausgetrieben und befüllt werden. Bevorzugt wird zuerst die Kolbeneinheit mit dem Leckage-Abdichtmittel ausgetrieben und dann das Leckage-Abdichtmittel befüllt.

Bevorzugt umfasst die Leckage-Abdichtvorrichtung wenigstens einen Freigabeeinheit zum Halten der Leckage-Abdichtvorrichtung und zum Betätigen des wenigstens einen Fluidanschlusses und/oder der wenigstens einen Fluidabgabeeinheit zur Fluidabgabe.

Die Freigabeeinheit kann bspw. nach Art eines Pistolengriffs an der Trägereinheit integral vorgesehen sein oder daran gekoppelt werden. Die Freigabeeinheit kann einen Abzugsmechanismus umfassen. Bei Betätigung des Abzugs lässt sich der wenigstens eine Fluidanschlusses und/oder die wenigstens einen Fluidabgabeeinheit zur Fluidabgabe auslösen. Beispielsweise kann die Fluidabgabeeinheit nach Art eines Feuerlöschers ausgelöst werden und bei Betätigung des Abzugs eine Dichtung oder Öffnung der Fluidabgabeeinheit, etwa durch Abzug eines Dichtstreifens, freigegeben werden so dass Fluid ausströmen kann.

Bevorzugt ist bei der Leckage-Abdichtvorrichtung der wenigstens eine Fluidanschluss und/oder die wenigstens eine Fluidabgabeeinheit mit einer mit der Kolbeneinheit gekoppelten oder darin integrierten Fluidzuleitung zum Befüllen des Leckage-Abdichtmittels verbindbar.

Diese Maßnahme stellt eine sichere Befüllung des Leckage-Abdichtmittels sicher.

Bevorzugt umfasst die Leckage-Abdichtvorrichtung wenigstens einen zweiten Fluidanschlusses oder wenigstens eine zweite Fluidabgabeeinheit zum Vortreiben des Kolbens in die Abdichtposition.

Diese Maßnahme ermöglicht eine flexible Handhabung und einen variablen Einsatz der Leckage-Abdichtvorrichtung.

Vorzugsweise umfasst die Leckage-Abdichtvorrichtung weiter wenigstens eine zweite Freigabeeinheit zum Freigeben des zweiten Fluidanschlusses oder der zweiten Fluidabgabeeinheit zur Fluidabgabe.

Mit dieser Maßnahme lassen sich der zweite Fluidanschluss oder die zweite Fluidabgabeeinheit variabel einsetzen und steuern.

Bevorzugt sind bei der Leckage-Abdichtvorrichtung die Trägereinheit und/oder die Kolbeneinheit einstückig ausgebildet.

Dies ermöglicht eine konstruktiv einfache Ausgestaltung.

Vorzugweise ist bei der Leckage-Abdichtvorrichtung die Trägereinheit und/oder die Kolbeneinheit mehrteilig ausgebildet.

Mit dieser Maßnahme lassen sich insbesondere Dimension und Abmessung der Leckage-Abdichtvorrichtung variieren und die Leckage-Abdichtvorrichtung bspw. zum Transport zerlegen.

Bevorzugt umfasst die Leckage-Abdichtvorrichtung wenigstens ein Einführhilfsmittel zur Einführung der Leckage-Abdichtvorrichtung in die Leckage, das in der Lagerposition das Leckage-Abdichtmittels wenigstens teilweise umgibt und in der Abdichtposition ein Befüllen des Leckage-Abdichtmittels erlaubt.

Das Einführhilfsmittel verringert den Widerstand beim Eindringen der Leckage-Abdichtvorrichtung in das Medium und ermöglicht somit ein leichteres Eindringen. Ferner dient das Einführhilfsmittel als Schutz des Leckage-Abdichtmittels und hilft auch, eine größere Abdrift der Leckage-Abdichtvorrichtung innerhalb der Leckage zu verhindern.

Das wenigstens eine Einführhilfsmittel kann aus geeigneten Materialien, beispielsweise Kunststoff, Polyester, hitzebeständigem Material wie Kohlenfaser, Glasfaser oder ähnlichen Materialien hergestellt sein. Das Material wird in Abhängigkeit vom Einsatzzweck ausgewählt.

Bevorzugt umfasst bei der Leckage-Abdichtvorrichtung das wenigstens eine Einführhilfsmittel, wenigstens eine Gleitspitze und wenigstens eine Gleitschale zur Einführung der Leckage-Abdichtvorrichtung in die Leckage.

Nach dem Austreiben können die Gleitschalen und die Gleitspitze einfach seitlich oder nach unten wegfallen, da sie am Leckage-Abdichtmittel angelagert sein können. Mit dieser Maßnahmen lässt sich das Abdichtmittel frei befüllen und expandieren.

Vorzugsweise umfasst die Leckage-Abdichtvorrichtung weiter wenigstens eine Rückstoßsicherung zum Festlegen der Leckage-Abdichtvorrichtung in einem Behälter, insbesondere in einem Rohr, wobei die Rückstoßsicherung mit der Leckage-Abdichtvorrichtung lösbar verbindbar vorgesehen sein kann.

Die Rückstoßsicherung lässt sich wahlweise in Abhängigkeit vom Einsatzort zusätzlich montieren. Dazu kann ein geeigneter Koppelmechanismus vorgesehen, bspw. über geeignete Befestigungsmittel, etwa Schellen oder Hülsen und Schrauben. Die Rückstoßsicherung ist bevorzugt selbstsichernd vorgesehen, so dass die Leckage-Abdichtvorrichtung bei einem Rohreinsatz nicht durch das ausströmende Medium aus dem Rohr getrieben wird.

Vorzugsweise umfasst bei der Leckage-Abdichtvorrichtung die Rückstoßsicherung wenigstens zwei selbstklemmende oder klemmende Rückhaltearme, die federbelastet vorgespannt sind und/oder deren Oberfläche rutschhemmend vorgesehen ist.

Diese Maßnahme ist eine einfache und kostengünstige Ausgestaltung der Rückstoßsicherung. Die Arme lassen sich einzeln oder zusammen seitlich an der Trägereinheit montieren und stützen sich dann bspw. federbelastet an der Rohrinnenfläche ab. Eine Oberflächenbearbeitung der Arme kann eine rutschhemmende Struktur bereitstellen, z.B. Nuten, Riefen, Fischhautstruktur etc. Alternativ oder zusätzlich keine auch eine rutschhemmende Beschichtung auf die Arme aufgetragen oder dort gekoppelt werden, bspw. eine Gummischicht. Da das Medium aus dem Behälter die Leckage-Abdichtvorrichtung und damit die Rückstoßsicherung beaufschlagt, verkeilt sich diese selbstsichernd insbesondere im Rohr.

Bevorzugt umfasst die Leckage-Abdichtvorrichtung weiter eine Anschlussschnittstelle zur Montage auf einem Stativ oder einer Lafette.

Diese Maßnahme ermöglicht eine schnelle und flexible Montage an einer Lafette oder Stativ und erweitert damit den Einsatzbereich der Leckage-Abdichtvorrichtung.

Bevorzugt umfasst die Leckage-Abdichtvorrichtung weiter eine Lafette oder Stativ, auf der die Leckage-Abdichtvorrichtung montierbar ist.

Die Lafette oder Stativ kann fahrbar vorgesehen sein, was den Einsatz erleichtert. Auch lässt sich bspw. eine Lafette oder Stativ motorisieren und ggf. fernsteuern, so dass bei ausströmenden etwa giftigen oder gefährlichen Medien keine Nutzer gefährdet werden. Zusätzlich ermöglichen eine Lafette oder Stativ einen flexiblen Einsatz, da Leckagen auch in verschiedenen Höhen abgedichtet werden können.

### Figurenbeschreibung

Ausführungsbeispiele der Erfindung sind im Folgenden unter Bezugnahme auf die beigefügten, schematischen Zeichnungen näher erläutert. Darin zeigen:
Fig. 1A eine Längsschnittdarstellung einer erfindungsgemäßen Leckage-Abdichtvorrichtung in einer Ansicht von der Seite;
Fig. 1B eine Längsschnittansicht der Ausführungsform aus Fig. 1A mit einem expandierten Abdichtmittel in der Abdichtposition;
Fig. 2A eine Längsschnittansicht einer weiteren Ausführungsform der erfindungsgemäßen Leckage-Abdichtvorrichtung in einer Lagerposition in einer Ansicht von der Seite;
Fig. 2B eine Längsschnittansicht einer weiteren Ausführungsform der erfindungsgemäßen Leckage-Abdichtvorrichtung in einer Lagerposition in einer Ansicht von der Seite;
Fig. 2C eine Längsschnittansicht der Ausführungsform der erfindungsgemäßen Leckage-Abdichtvorrichtung aus Fig. 2B mit einem expandierten Abdichtmittel in der Abdichtposition;
Fig. 3A eine Längsschnittansicht einer weiteren Ausführungsform der erfindungsgemäßen Leckage-Abdichtvorrichtung in einer Lagerposition in einer Ansicht von der Seite;
Fig. 3B eine Längsschnittansicht auf die Ausführungsform aus Fig. 3A mit einem expandierenden Abdichtmittel in der Abdichtposition;
Fig. 3C eine Längsschnittdarstellung der Ausführungsform gemäß Fig. 3A und 3B in der Abgabeposition mit vollständig gefülltem und expandiertem Abdichtmittel;
Fig. 4 eine Längsschnittansicht der Ausführungsform aus Fig. 3A bis 3C in der Abdichtposition, in der das Abdichtmittel eine Leckage in einem Behälter abdichtet;
Fig. 5A eine Längsschnittansicht einer weiteren Ausführungsform der erfindungsgemäßen Leckage-Abdichtvorrichtung zur Abdichtung einer Leckage in einem Rohr in der Abdichtposition;
Fig. 5B eine Querschnittsansicht der Ausführungsform aus Fig. A entlang der Schnittebene A-A von hinten; und
Fig. 6 eine perspektivische Darstellung einer weiteren Ausführungsform der erfindungsgemäßen Leckage-Abdichtvorrichtung, bei dem eine erfindungsgemäße Leckage-Abdichtung auf einem Stativ beziehungsweise einer Lafette montiert ist.

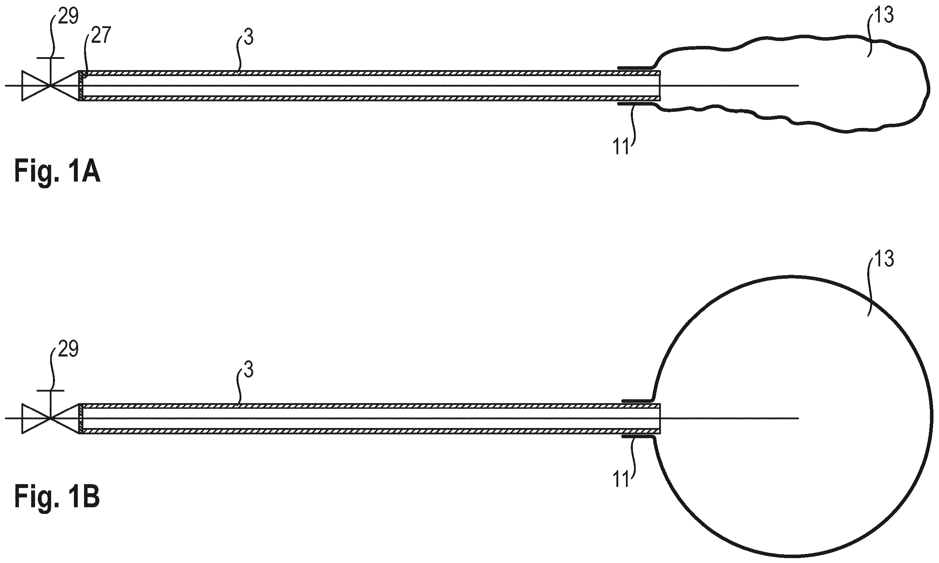

Der Aufbau einer Leckage-Abdichtvorrichtung 1 wird zunächst anhand der Ausführungsform in Fig. 1A und B erläutert. Fig. 1A zeigt die Leckage-Abdichtvorrichtung 1 in ihrer Lagerposition und Fig. 1B in ihrer Abdichtposition.

Die Leckage-Abdichtvorrichtung 1 umfasst eine rohrartige Trägereinheit 3, die sich in Längsrichtung erstreckt. Am hinteren Ende der Trägereinheit 3 ist ein Fluidanschluss 29 in Form eines Ventils vorgesehen. Der Fluidanschluss 29 dient zur Verbindung der Leckage-Abdichtvorrichtung 1 mit einer Fluidquelle (nicht gezeigt), etwa ein externer Kompressor oder einer Fluidpatrone oder Gasflasche (nicht gezeigt) in der ein gasförmiges oder flüssiges und/oder pulverförmiges Fluid zum Befüllen des Abdichtmittel 13 gespeichert ist. Das Fluid weist entweder den für den jeweiligen Einsatzzweck erforderlichen Druck im Fluidspeicher auf oder kann über Zusatzeinrichtungen, wie etwa den Kompressor, unter den erforderlichen Druck gesetzt werden. Zusätzlich kann eine Dichtung 27 optional zum Abdichten des Fluidanschlusses 29 vorgesehen sein. Die Fluidzuführung ist schematisch über den Strich vom Fluidanschluss 29 bis in das Abdichtmittel 13 dargestellt.

An der Vorderseite der Trägereinheit 3 ist das Abdichtmittel 13 über ein Befestigungsmittel 11, etwa ein Gewindeabschnitt oder eine sonstige geeignete Befestigung, mit der Trägereinheit 3 verbunden. Das Abdichtmittel 13 ist in der hier gezeigten Lagerposition als nicht befüllter Ballon vorgesehen, der die Trägereinheit 3 umgibt. Ebenso kann das Abdichtmittel 13 in der Lagerposition im Inneren der Trägereinheit 3 befestigt sein. Alternativ kann sich das Abdichtmittel 13 auch in der Lagerposition ganz oder teilweise innerhalb des vorderen Endes der Trägereinheit 3 befinden und bündig damit abschließen oder teilweise vorstehen.

Fig. 1B zeigt die Ausführungsform gemäß Fig. 1A in der Abdichtposition. Nach einer Betätigung bzw. Freigabe der Fluidquelle wird entweder über die Fluidpatrone oder den Fluidanschluss 29 das gasförmige oder flüssige Fluid in die Trägereinheit 3 zugeleitet. Durch den Druck des zugeführten Fluids wird das Abdichtmittel 13 befüllt und expandiert. Fig. 1B zeigt das vollständig befüllte Abdichtmittel 13 bzw. Dichtungsball 13, der über das Befestigungsmittel 11 an der Trägereinheit gehalten wird.

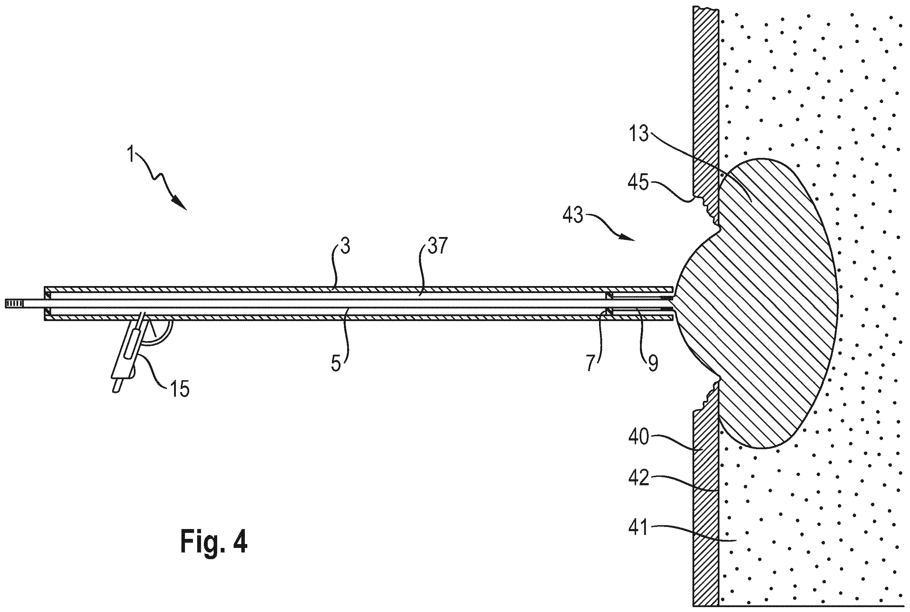

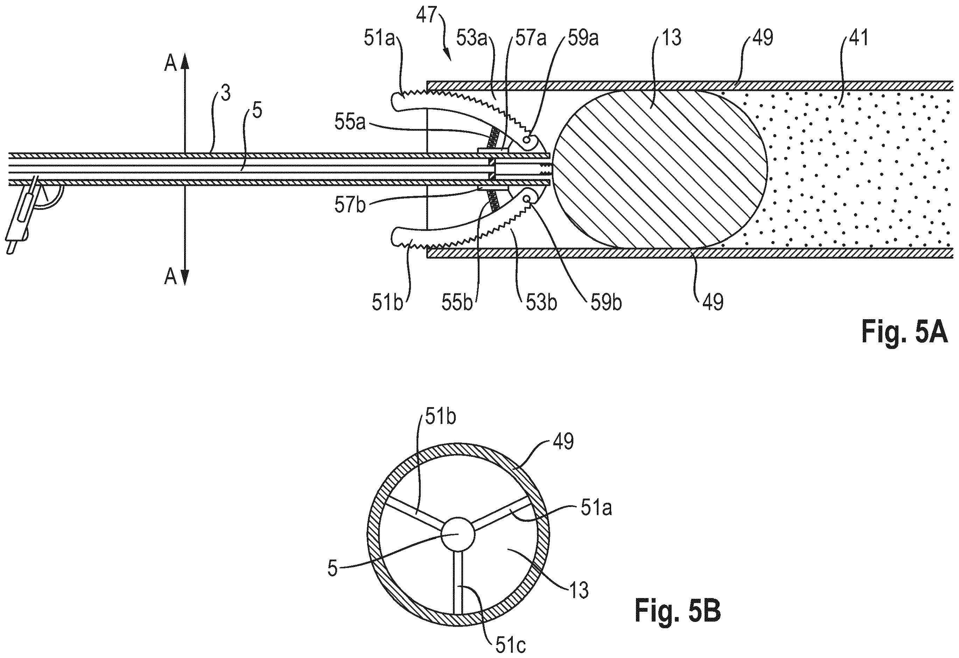

Das Grundprinzip der Erfindung liegt darin, dass die Leckage-Abdichtvorrichtung 1 in ihrer Lagerposition in eine Leckage eingeführt wird, dann das Abdichtmittel mit einem geeigneten Fluid befüllt wird und in der Abdichtposition das aus der Leckage ausströmende Medium das Abdichtmittel 13 von innen gegen die Leckage beaufschlagt und dadurch die Leckage abgedichtet wird (Vgl. auch Fig. 4 und 5).

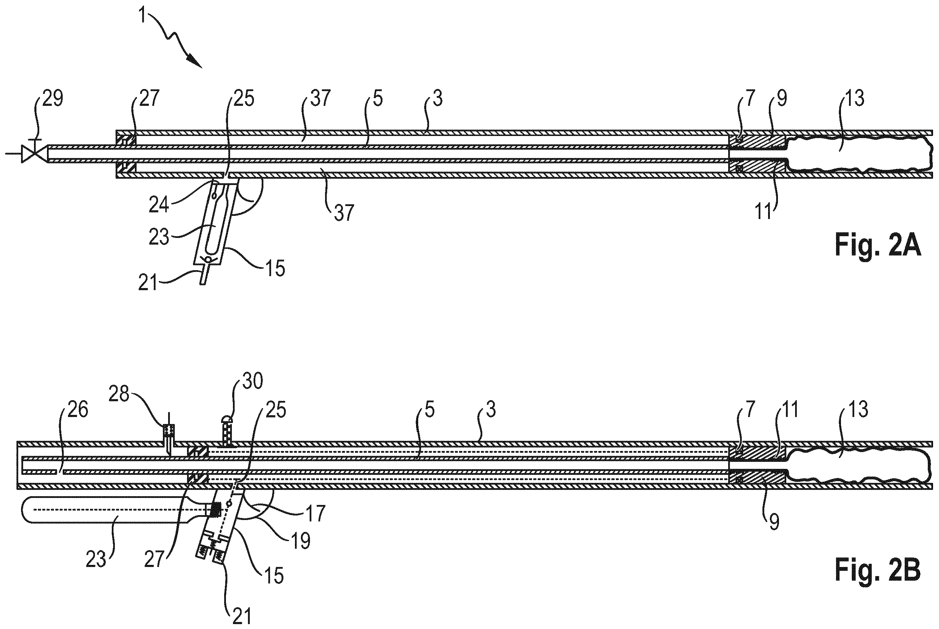

Fig. 2A und B zeigen die Lagerposition zweier weiterer Leckage-Abdichtvorrichtungen bzw. Leck-Stopp-Pistolen 1.Diese umfassen ebenso jeweils die rohrartige Trägereinheit 3.

Innerhalb der Trägereinheit 3 ist jeweils eine in Längsrichtung bewegliche Kolbeneinheit 5, 9 vorgesehen. Diese umfasst einen Kolbenabschnitt 5 und einen Kolbenabschnitt 9, die einstückig oder mehrteilig vorgesehen sein können und miteinander gekoppelt sind. Im Inneren umfasst der Kolbenabschnitt 5 eine Fluidzuleitung, die sich zu seinem vorderen, in der Figur rechten Ende erstreckt. An der Vorderseite der Trägereinheit 3 ist ein Dichtungsmittel 7, bevorzugt ein elastisches Dichtungsmittel etwa ein Gummistopfen oder eine vergleichbare Ausgestaltung im Inneren der Trägereinheit 3 vorgesehen, die den Kolbenabschnitt 9 umgibt.

An der Vorderseite der Leckage-Abdichtvorrichtung oder auch Leck-Stopp-Pistole 1 genannt verbreitert sich der Kolbenabschnitt 5 in einen Kolbenabschnitt 9. Die beiden Kolbenabschnitte sind über geeignete Befestigungsmittel miteinander gekoppelt, vorliegend über eine Gewindeverbindung. Am Ende des Kolbenabschnitts 9, ist das Abdichtmittel 13 über ein Befestigungsmittel, hier über eine Gewindeverschraubung 11 mit dem Kolbenabschnitt 9 verbunden.

Das Abdichtmittel 13 ist in diesen beiden Ausführungsformen in der Lagerposition als ein nicht befüllter Ballon vorgesehen, etwa zusammengefaltet. Dieser erstreckt sich in der Lagerposition bis zum vorderen Ende der Trägereinheit 3 und schließt bündig damit ab. Alternativ kann er auch teilweise aus der Trägereinheit 3 vorstehen.

An der Unterseite der Trägereinheit, die auch Richtlanze 3 genannt wird, ist eine pistolengriffartige Abzugseinrichtung bzw. Haltevorrichtung oder Freigabeeinheit 15 vorgesehen. Diese kann einstückig mit der Trägereinheit 3 ausgebildet sein oder auch separat und mit der Trägereinheit 3 verbunden sein. Die Freigabeeinheit 15 umfasst einen Abzug 17, der von einem Abzugsbügel 19 gegen eine unbeabsichtigte Betätigung geschützt ist. '

Im Inneren der Freigabeeinheit 15 ist eine Fluidpatrone, insbesondere eine Kohlensäurepatrone 23 als Fluidabgabeeinheit vorgesehen, die über eine Fluidzuleitung 25 mit einem innerhalb der Trägereinheit 3 vorgesehenen Verdichtungsraum 37 gekoppelt ist. Der Verdichtungsraum 37 erstreckt sich über das gesamte Innere der Trägereinheit 3 bis hin zur Dichtung 7. Die Kohlensäurepatrone 23 sorgt mit ihrem Fluid als Ausdrückmittel dafür, dass das Abdichtmittel (Abdichtungsball) 13 aus der Trägereinheit/Richtlanze 3 heraus befördert wird, welches über den Verdichtungsraum 37 geschieht. Ausgelöst wird dieser Vorgang mechanisch per Hand durch Betätigungen des Abzugs 17 wodurch die Kohlensäurepatrone 23 durch Entfernen einer Dichtung oder eines Dichtstreifens 24 an ihrer Oberseite geöffnet wird, etwa wie bei einem Feuerlöscher, und vollständig entleert wird.

Zusätzlich ist an der Freigabeeinheit 15 ein Fluidanschluss 21 für den Anschluss einer externen Fluidquelle, beispielsweise einer Druckluft- oder sonstigen Gasquelle oder Flüssigkeitsquelle vorgesehen. Der Fluidanschluss 21 kann auch alternativ zur Fluidpatrone 23 vorgesehen sein. Im vorliegenden Fall sind jedoch beide vorgesehen. Die Fluidpatrone 23 gewährleistet einen autarken Einsatz der Leckage-Abdichtvorrichtung bzw. Leck-Stopp-Pistole 1. Der Fluidanschluss 21 ermöglicht den Anschluss an eine externe Fluidquelle, etwa einen Kompressor oder vergleichbare Einheiten, die Druck beaufschlagtes Fluid zuführen können.

Am hinteren Ende der Trägereinheit 3 ist eine den Innenraum, insbesondere den Verdichtungsraum 37 der Trägereinheit 3 abdichtende Dichtung 27 vorgesehen, die von dem Kolbenabschnitt 5 durchdrungen ist, derart, dass der Kolbenabschnitt 5 in der Lagerposition teilweise nach hinten vorsteht. Am hinteren Ende des Kolbenabschnitts 5 mit seiner darin befindlichen Fluidzuleitung ist optional ein weiterer Fluidanschluss 29 vorgesehen, über den sich das Abdichtmittel beziehungsweise der Abdichtball 13 befüllen lässt.

Ist das Abdichtmittel (Dichtungsball) 13 aus der Trägereinheit/Richtlanze ausgetrieben, wird das Abdichtmittel 13 bei der Ausführungsform gemäß Fig. 2A über den Anschluss 29 mit dem entsprechenden Fluid bis zu seinem optimalen Abdichtungsdruck aufgefüllt, um somit die Leckage verschließen zu können. Dieser Vorgang wird über ein Drucksteuerventil 29 gesteuert und gleichzeitig auch überwacht. Das Drucksteuerventil befindet sich an dem Fluidanschluss 29.

Die Ausführungsform gemäß Fig. 2B unterschiedet sich von der Ausführungsform gemäß Fig. 2A dadurch, dass die Kohlensäurepatrone bzw. Fluidquelle 23 größer dimensioniert vorgesehen ist und teilweise außerhalb der Abzugseinrichtung bzw. Haltevorrichtung 15 angeordnet ist. Außerdem ist bei dieser Ausführungsform optional ein zweiter Fluidanschluss oder ein Überdruckventil 21 vorgesehen. Das Überdruckventil 21 dient dazu einen etwaigen Überdruck in dem Verdichtungsraum 37 und/oder dem Abdichtmittel 13 selbsttätig abzulassen und zu regulieren. Bei Fluidfreigabe bzw. Fluidzufuhr über die Kohlensäurepatrone bzw. Fluidquelle 23 befüllt das zugeführte Fluid über die Fluidzuleitung 25 zunächst den Verdichtungsraum 37 und treibt dabei den Kolbenabschnitt 9 mit dem Abdichtmittel aus der Trägereinheit 3 aus. Der Kolbenabschnitt 5 durchdringt dazu das Dichtmittel 27, das in der Lagerposition in etwa nahe zu und oberhalb der Abzugseinrichtung 15 vorgesehen ist. Das Dichtmittel 27 begrenzt den Verdichtungsraum 37 nach hinten und dichtet ihn ab.

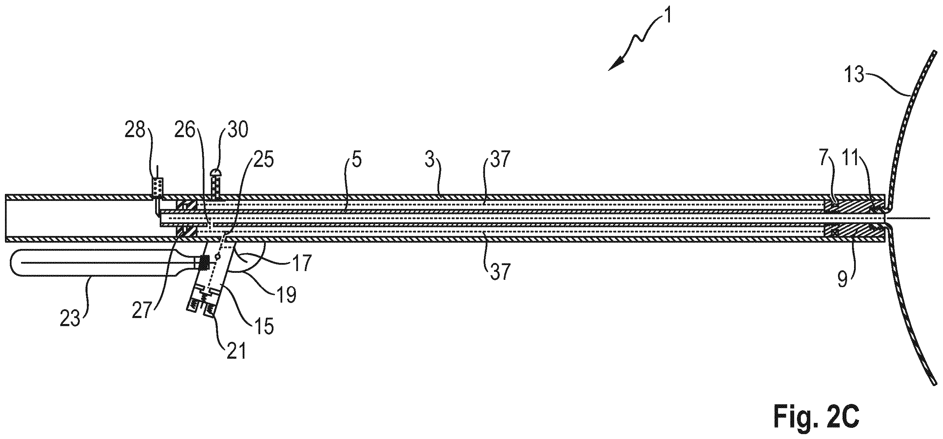

Über die Fluidzufuhr beaufschlagt das sich expandierende Fluid die Kolbeneinheit 5, 9 und treibt die Kolbenabschnitte 5, 9 und das Abdichtmittel 13 nach vorne aus (vgl. Fig. 2C). Der Kolbenabschnitt 5 wird dabei soweit vorgetrieben, dass er in der Abdichtposition mit seiner Fluidzuleitung 26 das Dichtmittel 27 passiert, so dass das Fluid über die weitere Fluidzuleitung 26 in die Fluidleitung 5 eindringen kann und darüber das ausgetriebene Abdichtmittel 13 befüllt.

Der oder die Fluiddrücke innerhalb des Abdichtmittels 13 sowie innerhalb des Verdichtungsraums 37 lassen sich über eine Ventileinheiten 30 jeweils unabhängig voneinander oder gemeinsam durch eine Fluidabgabe nach außen steuern, so dass sich insbesondere das Volumen des Abdichtmittels 13 beliebig anpassen lässt.

Diese Maßnahme lässt sich bei sämtlichen Ausführungsformen der Erfindung vornehmen und in bekannter Weise beliebig variieren.

Fig. 2C zeigt den vollständig befüllten Dichtungsball 13, der über das Gewinde 11 mit dem Kolbenabschnitt 9 verbunden ist und dort gehalten wird. Der Kolbenabschnitt 5 ist über die Fluidzuleitung 26 mit dem Verdichtungsraum verbunden. Zusätzlich ist eine Rückstoßsicherung 28 in Form eines federbelasteten Bolzens vorgesehen. In der Lagerposition liegt der Bolzen 28 federbelastet am Kolbenabschnitt 5 an. Ist nun wie in Fig. 2C gezeigt der Kolbenabschnitt 5 in die Abdichtposition vorgetrieben und passiert den Bolzen 28, kann die Feder den Bolzen 28 in die Freigabeneinheit 3 hinein drängen, so dass der Bolzen 28 den Kolbenabschnitt 5 an dessen hinterem Ende festlegt und gegen ein unbeabsichtigtes Verbringen in dessen Lagerposition sichert sowie ein Ausfahren aus oder Bewegen in der Trägereinheit 3 verhindert.

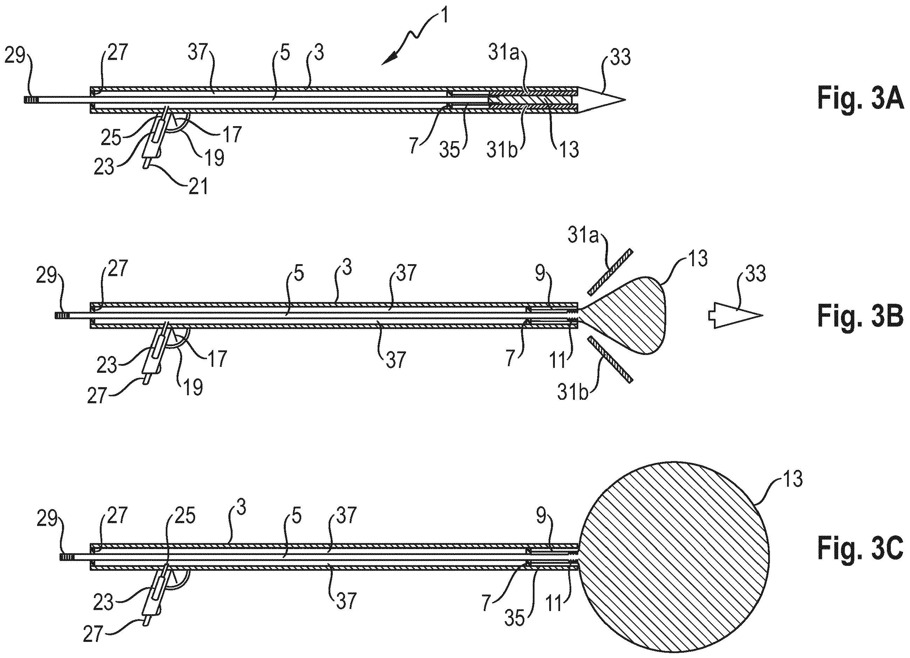

Eine weitere Ausführungsform der erfindungsgemäßen Leckage-Abdichtvorrichtung 1 wird nun anhand der Fig. 3A bis 3C und 4 erläutert. Die in Fig. 3A bis C und Fig. 4 gezeigte Ausführungsform der Leckage-Abdichtvorrichtung 1 unterscheidet sich von den Ausführungsformen gemäß Fig. 1A und B sowie 2 A bis C dadurch, dass am vorderen Ende Gleitschalen 31a, 31b sowie eine Gleitspitze 33 als Einführungshilfsmittel vorgesehen sind.

Fig. 3A zeigt die Lagerposition der Leckage-Abdichtvorrichtung 1, in der die Gleitschalen 31a, b vollständig und die Gleitspitze 33 teilweise innerhalb der Trägereinheit 3 aufgenommen sind. Das Abdichtmittel beziehungsweise der Ballon 13 ist ebenso vollständig innerhalb der Trägereinheit 3 aufgenommen und wird an seinem vorderen Ende über die pfeilspitzenartig ausgebildete Gleitspitze 33 abgedeckt und somit vor Beschädigungen geschützt. Die Gleitspitze kann auch alternative geometrische Ausgestaltungen, beispielsweise eine Abrundung oder Halbkugelform oder ähnliches, aufweisen und erleichtert ein Einführen der Leckage-Abdichtvorrichtung in die Leckage. Die Gleitspitze 33 ist etwa über Formpassung und/oder Presspassung oder andere geeignete Maßnahmen in der Lagerposition gehalten. Beispielsweise kann sie auch über eine Art Klemmring (nicht gezeigt) gesichert sein. Alternativ kann die Gleitspitze auch mit einem Kleber mit sehr geringer Klebekraft gesichert werden. Diese Sicherung der Gleitspitze 33 gibt bei Druck, der durch das Austriebs-Fluid aufgebaut wird, nach, sodass der Klemmring/Formpassung zusammen mit der Gleitspitze ungehindert nach vorne austreten können und das Abdichtmittel 13 frei in die Leckage eindringen kann.

Fig. 3B zeigt die Ausführungsform gemäß Fig. 3A in der Abdichtposition mit einem teilweise befüllten Abdichtball 13. Nach Betätigung des Abzugs 17 wird entweder über die Fluidpatrone 23 oder den Fluidanschluss 21 ein gasförmiges oder flüssiges Fluid in den Verdichtungsraum 37 innerhalb der Trägereinheit 3 über die Fluidzuleitung 25 zugeleitet. Durch den entstehenden Druck des zugeführten Fluids werden die Kolbenabschnitte 5, 9 nach vorne getrieben, wodurch das Abdichtmittel 13, die Gleitschalen 31a, 31b sowie die Gleitspitze 33 aus der Trägereinheit 3 ausgetrieben bzw. heraus gefördert werden.

Der Kolben bzw. die darin vorgesehene Fluidleitung 5 wird für die Befüllung des Abdichtmittels 13 mit Fluid verwendet. Dazu wird der Fluidanschluss 29 mit einer externen Fluidquelle, etwa ein Kompressor (nicht gezeigt) oder einer weiteren Fluidabgabeeinheit (nicht gezeigt) gekoppelt. Das einströmende Fluid befüllt das Abdichtmittel 13 und lässt sich über ein nicht gezeigtes Ventil in der Menge sowie im Druck steuern.

Der Druck des Fluids innerhalb des Verdichtungsraums 37 sowie innerhalb der Fluidzuleitung des Kolbenabschnitts 5 ist so hoch, um den Druck des ausströmenden Mediums 41 zu widerstehen. So kann beispielsweise bei einem Innendruck des ausströmenden Mediums 41 von 1,5 bar der Fluiddruck zum Vortreiben des Kolbens 9 und zum Auffüllen des Abdichtballs 13 etwas höher als 1,5 bar sein. Das den Abdichtball 13 und Kolben 9 vortreibende Fluid wird in Abhängigkeit des ausströmenden Mediums 41 gewählt.

Beim Befüllen des Abdichtmittels beziehungsweise Ballons 13 und Austreiben der Kolbenabschnitte 5, 9 werden also die Gleitschalen 31a, 31b und die Gleitspitze 33 aus der Trägereinheit 3 herausgedrängt. Da diese nur lose bzw. mit einem geringen Befestigungswiderstand in der Lagerposition am gefalteten Dichtungsball 13 anliegen, können diese nun vom Dichtungsball abfallen. Die Gleitschalen 31a, b und die Gleitspitze 33 wirken somit als Einführungshilfe und schützen den Dichtungsball vor Beschädigungen.

Ferner befindet sich in Fig. 3B und C der Kolbenabschnitt 9 in seiner vorderen Endposition, in der er mehr oder weniger bündig mit dem vorderen Ende der Trägereinheit 3 abschließt. Durch diese Vorwärtsbewegung des Kolbenabschnitts 9 ist zeitgleich der Kolbenabschnitt 5 weiter in die Trägereinheit 3 eingeführt, so dass deren hinteres Ende nur noch geringfügig übersteht.

Fig. 3C zeigt den vollständig befüllten Dichtungsball 13, der über die Befestigungsmittel 11 mit dem Kolbenabschnitt 9 verbunden ist und dort gehalten wird. Der Kolbenabschnitt 9 ist mit dem Kolbenabschnitt 5 über einen Gewindeabschnitt beziehungsweise Begleitstück 35 gekoppelt. Alternativ können diese beiden Elemente auch einstückig ausgebildet sein.

Fig. 4 zeigt die Ausführungsform aus Fig. 3A bis C in der Abdichtposition. Wie dargestellt, wird die Leckage-Abdichtvorrichtung 1 zunächst in die Leckage 43 eines Behälters 40 eingeführt und dann über den Abzugsmechanismus 15 ausgelöst. Der Abdichtball 13 ist dabei aus einem ausreichend elastischen und rissfesten Material ausgebildet, so dass er nicht über Risskanten 45 der Leckage 43 beschädigt wird.

Nach einem Befüllen des Abdichtballs 13 wird dieser über den Innendruck des Behälters 40 durch das darin befindliche Medium 41, dass beispielsweise gasförmig oder flüssig vorliegt, gegen die Leckage 43 gedrückt, was zu einer Abflachung der Oberfläche des Abdichtballs 13 führt, so dass sich dieser über den äußeren Umfang der Leckage hinweg erstreckt und beidseitig die Leckage 43 umgibt, sich gegen die Innenwandung 42 des Behälters 40 abstützt und dadurch die Leckage ganz oder teilweise abdichtet.

Zur Verbesserung der Dichtwirkung ist die Leckage-Abdichtvorrichtung 1 teilweise aus dem Behälter herausgezogen, indem beispielsweise ein Nutzer diese zurückzieht oder sie maschinell zurückgeführt ist, was zu einem Verspannen des Abdichtballs 13 in der Leckage 43 führt, so dass die Risskanten 45 wenigstens teilweise von dem Abdichtball 13 abgedeckt sind. Dadurch lässt sich die Dichtwirkung der Leckage-Abdichtvorrichtung 1 und insbesondere des Abdichtballs 13 verbessern.

Fig. 5A zeigt eine weitere Ausführungsform der erfindungsgemäßen Leckage-Abdichtvorrichtung oder Leck-Stopp-Pistole 1. Diese ist zur Abdichtung von Rohrleitungen 49 vorgesehen und unterscheidet sich im Aufbau von den vorherigen Ausführungsformen der Erfindung dadurch, dass eine Rückstoßsicherung 47 vorgesehen ist. Bei Rohren 49 stellt sich die Problematik, dass der Abdichtball 13 gegebenenfalls durch das ausströmende Medium 41 aus dem Rohr ausgetrieben werden könnte und die Leckage-Abdichtvorrichtung 1 entweder manuell oder maschinell dem Druck des ausströmenden Mediums 41 entgegengehalten werden muss.

In Fig. 5A ist die Abdichtposition der Leckage-Abdichtvorrichtung 1 gezeigt, in der die Leckage-Abdichtvorrichtung 1 in ein Rohr 49 eingeführt ist und der Abdichtball beziehungsweise das Abdichtmittel 13 vollständig mit dem Fluid befüllt ist (vgl. Fig. 3A bis 3C).

Der Rückstoßsicherungsmechanismus 47 entfaltet seine Wirkung nach Einführung der Leckage-Abdichtvorrichtung 1 ganz oder teilweise in das Rohr 49. Die Rückstoßsicherung 47 umfasst drei Sicherungsarme 51a, b und c, die sich in einer gleichmäßigen Winkelverteilung über den Innendurchmesser des Rohrs erstrecken.

Die Arme 51a, b, c sind über eine Anbauschnittstelle mit dem vorderen Ende der Trägereinheit 3 der Leckage-Abdichtvorrichtung 1 verbindbar. Dazu wird die Anbauschnittstelle 57a, b von vorne auf die Trägereinheit ausgesetzt, so dass ein hülsenartiger Abschnitt der Anbauschnittstelle 57 das vordere Ende der Trägereinheit 3 vollständig umschließt. Der hülsenartige Abschnitt entspricht dabei in seinen Innenabmessungen den Außenabmessungen der Trägereinheit 3 und ist entsprechend der Geometrie der Trägereinheit 3 ausgestaltet, d.h. etwa eckig, rund, etc. Die Anbauschnittstelle 57 lässt sich über eine Presspassung oder Formpassung und/oder zusätzlich über Befestigungsmittel etwa Schrauben mit der Außenoberfläche der Leckage-Abdichtvorrichtung 1 lösbar koppeln.

Alternativ lässt sich die Anbauschnittstelle 57 auch beispielsweise mit dem vorderen Ende der Trägereinheit 3 verschweißen, verkleben oder anders geeignet befestigen. Die Arme 51a, b und c sind über Scharnierstifte oder Gelenkverbindungen 59a, b und c jeweils beweglich an der Anbauschnittstelle 57 angelenkt. Zusätzlich sind elastische Mittel, in der vorliegenden Ausführungsform Federn 55a, b und c vorgesehen, die die Arme 51a, b und c federbelastet nach außen vorspannen, d.h. bei Einführen der Leckage-Abdichtvorrichtung 1 in das Rohr 49 werden die Federn 55a, b und c komprimiert, da die Arme 51a, b und c zusammengedrückt werden, d.h. in Richtung der Trägereinheit 3. Die Federn 55a, b und c beaufschlagen dann die Arme 51a, b und c im Inneren des Rohrs 49 gegen die Rohrinnenfläche, wobei ein zunehmender Rohrinnendruck dafür sorgt, das sich die Arme 51 a, b, c immer fester im Rohr 49 verkeilen, die Leckage-Abdichtvorrichtung 1 dort festlegen und damit für Sicherheit sorgen.

Die Arme 51a, b und c umfassen an ihrer Außenseite, d.h. der dem Rohr 49 zugewandten Seite eine rutschhemmende Oberfläche 53a, b und c. Diese kann durch ein rutschhemmendes Material, etwa eine Beschichtung oder auch durch eine mechanische Ausgestaltung der Oberfläche der Arme 51a, b und c erzielt werden, beispielsweise durch eine zackenartige oder rastartige Ausbildung. Darüber sind die Arme 51a, b, c selbsthemmend innerhalb des Rohres 49 verspannt und gesichert.

In Verbindung mit der rutschhemmenden Oberfläche 53a, b und c wird so eine Selbsthemmung der Rückstoßsicherung 47 innerhalb des Rohres 49 erzielt, so dass die Leckage-Abdichtvorrichtung 1 sicher innerhalb des Rohrs 49 gehalten ist und der Abdichtball 13 seine volle Dichtwirkung gegenüber dem ausströmenden Medium 41 entfalten kann.

Fig. 5B zeigt eine Draufsicht auf eine Querschnittsdarstellung entlang der Schnittstelle A-A aus Fig. 5A von hinten. Die Arme 51a, b, c sind schematisch dargestellt und liegen wie in Fig. 5A gezeigt, an der Innenoberfläche des Rohres 49 selbsthemmend an. Der Kolbenabschnitt beziehungsweise die Fluidzuleitung 5 ist ebenso gezeigt sowie der Abdichtball 13.

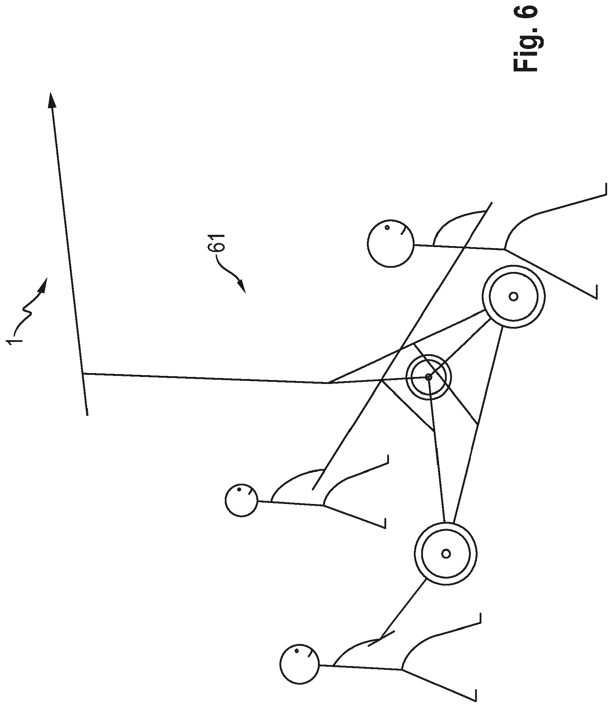

Fig. 6 zeigt eine alternative Ausführungsform der Erfindung, bei der die Leckage-Abdichtvorrichtung 1 schematisch dargestellt ist und auf einer Lafette beziehungsweise einem Stativ 61 montiert ist. Die Lafette beziehungsweise das Stativ 61 dient der Einführung der Leckage-Abdichtvorrichtung 1 in Leckagen, die sich in verschiedenen Höhen eines Behälters beispielsweise eines Tank, befinden können.

Das Stativ beziehungsweise die Lafette 61 kann manuell über mehrere Nutzer oder auch maschinell etwa über eine geeignete Arbeitsmaschine an den abzudichtenden Behälter oder Tank herangeführt werden, und lässt sich variabel in der Höhe einstellen. Diese Ausgestaltung kann insbesondere bei giftigen ausströmenden Gasen hilfreich sein, um die Leckage-Abgabevorrichtung maschinell in die jeweilige Leckage einzuführen.

Weitere Ausgestaltungen der Erfindung ergeben sich für den Fachmann im Rahmen der nachfolgenden Ansprüche sowie der beigefügten Figuren.

## Patentansprüche

1. Leckage-Abdichtvorrichtung (1) zum Abdichten einer Leckage in einem Behälter, Tank und/oder Rohr (40, 49) umfassend:
- eine gehäuseartige Trägereinheit (3),
- wenigstens ein an einem Endbereich der Trägereinheit (3) vorgesehenes, expandierbares Leckage-Abdichtmittel (13), das sich in seiner Lagerposition vollständig innerhalb der Trägereinheit befindet und nicht oder nur geringfügig expandiert ist, und
wenigstens einen Fluidanschluss (21) und/oder wenigstens eine Fluidabgabeeinheit (23), der/die mit der Trägereinheit (3) derart gekoppelt ist, dass bei Fluidzufuhr Fluid das Leckage-Abdichtmittel (13) in dessen Abdichtposition, in der sich das Leckage-Abdichtmittel zum Abdichten der Leckage wenigstens teilweise außerhalb der Trägereinheit (3) befindet wenigstens teilweise mit dem Fluid befüllt und expandiert, wobei das Leckage-Abdichtmittel (13) zwischen der Lagerposition und der Abdichtposition beweglich gelagert ist,
wobei in der Trägereinheit (3) eine längsbeweglich gelagerte Kolbeneinheit (5, 9) vorgesehen ist, und das Leckage-Abdichtmittel (13) mit der Kolbeneinheit (5, 9) und/oder der Trägereinheit (3) und dem wenigstens einen Fluidanschluss (21) und/oder der wenigstens einen Fluidabgabeeinheit (23) derart gekoppelt ist, dass bei Fluidzufuhr das Fluid die Kolbeneinheit (5, 9) in die Abdichtposition vortreibt und das Leckage- Abdichtmittel (13) über eine Fluidzuleitung (5) wenigstens teilweise befüllt.

2. Leckage-Abdichtvorrichtung (1) gemäß Anspruch 1 , weiter umfassend wenigstens eine Freigabeeinheit (15, 17) zum Halten der Leckage-Abdichtvorrichtung (1) und zum Betätigen des wenigstens einen Fluidanschlusses (21, 29) und/oder der wenigstens einen Fluidabgabeeinheit (23) zur Fluidabgabe.

3. Leckage-Abdichtvorrichtung (1) gemäß Anspruch 1 oder 2, bei der der wenigstens eine Fluidanschluss (21) und/oder die wenigstens eine Fluidabgabeeinheit (23) mit einer mit der Kolbeneinheit (5, 9) gekoppelten oder darin integrierten Fluidzuleitung (5) zum Befüllen des Leckage-Abdichtmittels (13) verbindbar ist.

4. Leckage-Abdichtvorrichtung (1) gemäß einem der Ansprüche 1 bis 3, weiter umfassend wenigstens einen zweiten Fluidanschlusses (29) oder wenigstens eine zweite Fluidabgabeeinheit zum Vortreiben des Kolbens (5, 9) in die Abdichtposition.

5. Leckage-Abdichtvorrichtung (1) gemäß Anspruch 4, weiter umfassend wenigstens eine zweite Freigabeeinheit zum Freigeben des zweiten Fluidanschlusses (29) oder der zweiten Fluidabgabeeinheit zur Fluidabgabe.

6. Leckage-Abdichtvorrichtung (1) gemäß einem der Ansprüche 1 bis 5, weiter umfassend wenigstens ein Einführhilfsmittel (31a, b, 33) zur Einführung der Leckage- Abdichtvorrichtung (1) in die Leckage (43), das in der Lagerposition das Leckage- Abdichtmittels (13) wenigstens teilweise umgibt und in der Abdichtposition ein Befüllen des Leckage-Abdichtmittels (13) erlaubt.

7. Leckage-Abdichtvorrichtung (1) gemäß Anspruch 6, bei der das wenigstens eine Einführhilfsmittel (31a, b, 33), wenigstens eine Gleitspitze (33) und wenigsten eine Gleitschale (3 1a, b) zur Einführung der Leckage- Abdichtvorrichtung (1) in die Leckage (43) umfasst.

8. Leckage-Abdichtvorrichtung (1) gemäß einem der Ansprüche 1 bis 7, weiter umfassend wenigstens eine Rückstoßsicherung (47) zum Festlegen der Leckage- Abdichtvorrichtung (1) in einem Behälter, insbesondere in einem Rohr (49), wobei die
Rückstoßsicherung (47) mit der Leckage-Abdichtvorrichtung (1) lösbar verbindbar vorgesehen ist.

9. Leckage- Abdichtvorrichtung (1) gemäß Anspruchs, bei der die Rückstoßsicherung (47) wenigstens zwei selbstklemmende oder klemmende Rückhaltearme (51a, b, c) umfasst, die insbesondere federbelastet vorgespannt sind und/oder deren Oberfläche rutschhemmend vorgesehen ist.

10. Leckage- Abdichtvorrichtung (1) gemäß einem der Ansprüche 1 bis 9, weiter umfassend eine Anschlussschnittstelle zur Montage auf einem Stativ oder einer Lafette (61).

11. Leckage- Abdichtvorrichtung (1) gemäß Anspruch 10, weiter umfassend eine Lafette oder Stativ (61), auf der die Leckage-Abdichtvorrichtung (1) montierbar ist.

12. System zum Abdichten einer Leckage (43) in einem Behälter, Tank und/oder Rohr (40, 49) umfassend
eine Leckage- Abdichtvorrichtung (1) gemäß einem der Ansprüche 1 bis 11. und eine mit einer Freigabeeinheit zur Fluidabgabe versehene Fluidzufuhrvorrichtung.

13. Verwendung einer Leckage- Abdichtvorrichtung (1) gemäß einem der Ansprüche 1 bis 11 zum Abdichten einer Leckage in einem Behälter, Tank und/oder Rohr (40, 49).

14. Verfahren zum Abdichten einer Leckage in einem Behälter, Tank und/oder Rohr (40, 49) umfassend die Schritte:
- Einführen einer Leckage-Abdichtvorrichtung (1) gemäß einem der Ansprüche 1 bis 12 wenigstens teilweise in eine Leckage (43) in dem Behälter, Tank und/oder Rohr (40, 49),
- wenigstens teilweise Befüllen und Expandieren des Leckage- Abdichtmittels (13) derart, dass das Leckage-Abdichtmittel (13) aus dem Inneren des Behälters, Tanks und/oder Rohrs (40, 49) durch das dort ausströmende Medium (41) gegen eine Innenwand (42) des Behälters, Tanks und/oder Rohrs (40, 49) beaufschlagt wird und die Leckage abdichtet.

## Claims

1. Leak sealing device (1) for sealing a leak in a container, tank and/or pipe (40, 49) comprising
- a housing-like carrier unit (3),
- at least one expandable leakage sealing means (13) provided at one end region of the carrier unit (3), which in its storage position is located completely within the carrier unit and is not or only slightly expanded, and
at least one fluid connection (21) and/or at least one fluid discharge unit (23), which is coupled to the carrier unit (3) in such a way that, when fluid is supplied, the leakage sealing means (13) is at least partially filled with the fluid and expands in its sealing position, in which the leakage sealing means is located at least partially outside the carrier unit (3) for sealing the leakage, the leakage sealing means (13) being mounted movably between the storage position and the sealing position,
wherein a longitudinally movably mounted piston unit (5, 9) is provided in the carrier unit (3), and the leakage sealing means (13) is coupled to the piston unit (5, 9) and/or the carrier unit (3) and the at least one fluid connection (21) and/or the at least one fluid discharge unit (23) in such a way that, when fluid is supplied, the fluid drives the piston unit (5, 9) into the sealing position and at least partially fills the leakage sealing means (13) via a fluid supply line (5).

2. Leak sealing device (1) according to claim 1 , further comprising at least one release unit (15, 17) for holding the leak sealing device (1) and for actuating the at least one fluid connection (21, 29) and/or the at least one fluid discharge unit (23) for fluid discharge.

3. Leak sealing device (1) according to claim 1 or 2, in which the at least one fluid connection (21) and/or the at least one fluid discharge unit (23) can be connected to a fluid supply line (5) coupled to the piston unit (5, 9) or integrated therein for filling the leak sealing means (13).

4. Leak sealing device (1) according to one of claims 1 to 3, further comprising at least one second fluid connection (29) or at least one second fluid discharge unit for advancing the piston (5, 9) into the sealing position.

5. Leak sealing device (1) according to claim 4, further comprising at least one second release unit for releasing the second fluid connection (29) or the second fluid discharge unit for fluid discharge.

6. Leak sealing device (1) according to any one of claims 1 to 5, further comprising at least one insertion aid means (31a, b, 33) for inserting the leak sealing device (1) into the leak (43), which in the storage position at least partially surrounds the leak sealing means (13) and in the sealing position allows filling of the leak sealing means (13).

7. Leak sealing device (1) according to claim 6, wherein the at least one insertion aid means (31a, b, 33) comprises at least one sliding tip (33) and at least one sliding shell (3a, b) for inserting the leak sealing device (1) into the leak (43).

8. Leak sealing device (1) according to one of claims 1 to 7, further comprising at least one recoil safety device (47) for fixing the leak sealing device (1) in a container, in particular in a pipe (49), wherein the recoil safety device (47) is connected to the leak sealing device (1). wherein the recoil protection (47) is provided to be detachably connectable to the leakage sealing device (1).

9. Leak sealing device (1) according to claim 8, in which the recoil safety device (47) comprises at least two self-clamping or clamping retaining arms (51a, b, c) which are pretensioned, in particular spring-loaded, and/or the surface of which is provided in a slip-resistant manner.

10. Leak sealing device (1) according to one of claims 1 to 9, further comprising a connection interface for mounting on a stand or a carriage (61).

11. Leak sealing device (1) according to claim 10, further comprising a carriage or tripod (61) on which the leak sealing device (1) is mountable.

12. System for sealing a leakage (43) in a container, tank and/or pipe (40, 49) comprising a leakage sealing device (1) according to one of claims 1 to 11 and a fluid supply device provided with a release unit for fluid release.

13. Use of a leakage sealing device (1) according to any one of claims 1 to 11 for sealing a leakage in a container, tank and/or pipe (40, 49).

14. Method for sealing a leakage in a container, tank and/or pipe (40, 49) comprising the steps of:
- Inserting a leakage sealing device (1) according to any one of claims 1 to 12 at least partially into a leakage (43) in the container, tank and/or pipe (40, 49),
- at least partially filling and expanding the leakage sealing means (13) in such a way that the leakage sealing means (13) is impinged from the interior of the container, tank and/or pipe (40, 49) by the medium (41) flowing out there against an inner wall (42) of the container, tank and/or pipe (40, 49) and seals the leakage.

## Revendications

1. Dispositif d'étanchéification de fuite (1) destiné à étanchéifier une fuite dans un récipient, un réservoir et/ou un tuyau (40, 49) comprenant :
- une unité de support (3) de type boîtier,
- au moins un moyen d'étanchéification de fuite (13) extensible, prévu contre une zone d'extrémité de l'unité de support (3), lequel dans sa position de stockage se trouve entièrement à l'intérieur de l'unité de support et ne s'étend pas ou uniquement légèrement, et
au moins un raccord de fluide (21) et/ou au moins une unité de délivrance de fluide (23), qui est couplé(e) avec l'unité de support (3) de sorte que, lors d'une amenée de fluide, le moyen d'étanchéification de fuite (13) est au moins partiellement rempli de fluide et étendu dans sa position d'étanchéification, dans laquelle le moyen d'étanchéification de fuite se trouve au moins partiellement à l'extérieur de l'unité de support (3) pour l'étanchéification de la fuite, dans lequel le moyen d'étanchéification de fuite (13) est monté de façon mobile entre la position de stockage et la position d'étanchéification,
dans lequel une unité de piston (5, 9) montée de façon à être mobile longitudinalement est prévue dans l'unité de support (3), et le moyen d'étanchéification de fuite (13) est couplé avec l'unité de piston (5, 9) et/ou l'unité de support (3) et le au moins un raccord de fluide (21) et/ou la au moins une unité de délivrance de fluide (23) de sorte que, lors d'une amenée de fluide, le fluide avance l'unité de piston (5, 9) dans la position d'étanchéification et remplisse au moins partiellement le moyen d'étanchéification de fuite (13) via une arrivée de fluide (5).

2. Dispositif d'étanchéification de fuite (1) selon la revendication 1, comprenant en outre au moins une unité de libération (15, 17) pour la retenue du dispositif d'étanchéification de fuite (1) et pour l'actionnement du au moins un raccord de fluide (21, 29) et/ou de la au moins une unité de délivrance de fluide (23) pour la délivrance de fluide.

3. Dispositif d'étanchéification de fuite (1) selon la revendication 1 ou 2, dans lequel le au moins un raccord de fluide (21) et/ou la au moins une unité de délivrance de fluide (23) peut être raccordé(e) avec une arrivée de fluide (5) couplée avec l'unité de piston (5, 9) ou intégrée dans celle-ci pour le remplissage du moyen d'étanchéification de fuite (13).

4. Dispositif d'étanchéification de fuite (1) selon l'une des revendications 1 à 3, comprenant en outre au moins un deuxième raccord de fluide (29) ou au moins une deuxième unité de délivrance de fluide pour l'avancement du piston (5, 9) dans la position d'étanchéification.

5. Dispositif d'étanchéification de fuite (1) selon la revendication 4, comprenant en outre au moins une deuxième unité de libération pour la libération du deuxième raccord de fluide (29) ou de la deuxième unité de délivrance de fluide pour la délivrance de fluide.

6. Dispositif d'étanchéification de fuite (1) selon l'une des revendications 1 à 5, comprenant en outre au moins un moyen d'aide à l'introduction (31a, b, 33) pour l'introduction du dispositif d'étanchéification de fuite (1) dans la fuite (43), lequel moyen d'aide à l'introduction entoure au moins partiellement le moyen d'étanchéification de fuite (13) dans la position de stockage et permet un remplissage du moyen d'étanchéification de fuite (13) dans la position d'étanchéification.

7. Dispositif d'étanchéification de fuite (1) selon la revendication 6, dans lequel le au moins un moyen d'aide à l'introduction (31a, b, 33) comprend au moins une pointe de glissement (33) et au moins une enveloppe de glissement (31a, b) pour l'introduction du dispositif d'étanchéification de fuite (1) dans la fuite (43).

8. Dispositif d'étanchéification de fuite (1) selon l'une des revendications 1 à 7, comprenant en outre au moins une protection contre le recul (47) pour la fixation du dispositif d'étanchéification de fuite (1) dans un récipient, en particulier dans un tuyau (49), dans lequel la protection contre le recul (47) est prévue de façon à pouvoir être raccordée de façon amovible avec le dispositif d'étanchéification de fuite (1).

9. Dispositif d'étanchéification de fuite (1) selon la revendication 8, dans lequel la protection contre le recul (47) comprend au moins deux bras de retenue (51a, b, c) autobloquants ou bloquants qui sont en particulier précontraints en étant sollicités par ressort et/ou dont la surface est prévue de façon antidérapante.

10. Dispositif d'étanchéification de fuite (1) selon l'une des revendications 1 à 9, comprenant en outre une interface de raccordement pour le montage sur un trépied ou un affût (61).

11. Dispositif d'étanchéification de fuite (1) selon la revendication 10, comprenant en outre un affût ou un trépied (61) sur lequel le dispositif d'étanchéification de fuite (1) peut être monté.

12. Système destiné à étanchéifier une fuite (43) dans un récipient, un réservoir et/ou un tuyau (40, 49) comprenant
un dispositif d'étanchéification de fuite (1) selon l'une des revendications 1 à 11 et un dispositif d'amenée de fluide muni d'une unité de libération pour la délivrance de fluide.

13. Utilisation d'un dispositif d'étanchéification de fuite (1) selon l'une des revendications 1 à 11 destinée à étanchéifier une fuite dans un récipient, un réservoir et/ou un tuyau (40, 49).

14. Procédé destiné à étanchéifier une fuite dans un récipient, un réservoir et/ou un tuyau (40, 49) comprenant les étapes de :
- introduction au moins partielle d'un dispositif d'étanchéification de fuite (1) selon l'une des revendications 1 à 12 dans une fuite (43) dans le récipient, le réservoir et/ou le tuyau (40, 49),
- remplissage et extension au moins partiels du moyen d'étanchéification de fuite (13) de sorte que le moyen d'étanchéification de fuite (13) soit sollicité contre une paroi intérieure (42) du récipient, du réservoir et/ou du tuyau (40, 49) depuis l'intérieur du récipient, du réservoir et/ou du tuyau (40, 49) par le milieu (41) s'en écoulant, et étanchéifie la fuite.
